(19) Europäisches Patentamt

European Patent Office

Office européen des brevets

(11) Veröffentlichungsnummer: **0 274 109 B1**

(12) **EUROPÄISCHE PATENTSCHRIFT**

(45) Veröffentlichungstag der Patentschrift: **05.05.93**

(21) Anmeldenummer: **87119003.9**

(22) Anmeldetag: **22.12.87**

(51) Int. Cl.⁵: **C08L 25/06**, C08F 287/00, //(C08L25/06,51:00), (C08F287/00,212:06)

(54) Thermoplastische Formmasse und Verfahren zu ihrer Herstellung.

(30) Priorität: **08.01.87 DE 3700332**

(43) Veröffentlichungstag der Anmeldung:
**13.07.88 Patentblatt 88/28**

(45) Bekanntmachung des Hinweises auf die Patenterteilung:
**05.05.93 Patentblatt 93/18**

(84) Benannte Vertragsstaaten:
**BE DE FR GB IT NL**

(56) Entgegenhaltungen:
**EP-A- 0 167 707**
**EP-A- 0 196 013**
**DE-A- 3 425 457**

(73) Patentinhaber: **BASF Aktiengesellschaft**
**Carl-Bosch-Strasse 38**
**W-6700 Ludwigshafen(DE)**

(72) Erfinder: **Schwaben, Hans-Dieter, Dr.**
**Lindenstrasse 3**
**W-6721 Freisbach(DE)**
Erfinder: **Echte, Adolf, Dr.**
**Leuschnerstrasse 42**
**W-6700 Ludwigshafen(DE)**
Erfinder: **Bueschl, Rainer, Dr.**
**Hollandstrasse 14**
**W-6701 Roedersheim-Gronau(DE)**
Erfinder: **Schlichtmann, Rainer**
**Bürgermeister-Horlacher-Strasse 60**
**W-6700 Ludwigshafen(DE)**
Erfinder: **Klaerner, Peter, Dr.**
**Hauptstrasse 62**
**W-6719 Battenberg(DE)**
Erfinder: **Kindler, Hubert, Dr.**
**Westring 19**
**W-6700 Ludwigshafen(DE)**

## Beschreibung

Die Erfindung betrifft eine thermoplastische Formmasse aus 80 bis 60 Gew.% einer Hartmatrix aus Polystyrol und 20 bis 40 Gew.% einer gleichmäßig in der Hartmatrix verteilten Weichphase, wie sie bei der Polymerisation von Styrol in Gegenwart eines linearen Styrol – Butadien – Blockcopolymerisates, das 35 bis 45 Gew.% Styrol und 65 bis 55 Gew.% Butadien aufweist, gebildet wird.

Zum Stand der Technik werden genannt

(1) DE – A 1 769 118
(2) DE – A 1 770 392
(3) DE – A 2 631 352
(4) DE – A 3 425 457
(5) EP – A 167 707

In (1) werden schlag – und stoßfeste Kunststoffe auf Basis von Polystyrol beschrieben, deren Weichphase Zellenteilchen unterschiedlicher Größenbereiche aufweist. Polystyrole nach dem in (1) beschriebenen Verfahren besitzen eine hohe Schlagzähigkeit, jedoch nur einen geringen Glanz.

In (2) wird ein kontinuierliches Verfahren zur Herstellung von schlagfestem Polystyrol mit Zellenteil – chenmorphologie beschrieben, das in einer Kaskade aus 2 Kesseln und 2 Türmen in Lösung durchgeführt wird. Die dabei erhaltenen Produkte besitzen eine glatte Oberfläche und einen hohen Gelgehalt.

Es ist bekannt, daß schlagfeste Polystyrole für eine Vielzahl von Anwendungen, in denen die Kombina – tion aus hohem Glanz und hoher Schlagzähigkeit gefordert wird, i.d.R. nicht verwendet werden können (z.B. Spielwaren, Telefongehäuse etc.). So werden nach dem in (3) beschriebenen Verfahren auf diskontinuierli – chem Weg mit Kautschuk modifizierte Polystyrole mit einem $d_{50}$ – Wert der Weichkomponentenphase (50 % – Wert der Volumenverteilungssumme) von weniger als 1 $\mu$m unter Verwendung eines Styrol – Butadien – Zweiblockcopolymeren erhalten. Aufgrund ihrer Teilchengröße weisen daraus im Spritzguß hergestellte Formteile zwar einen hohen Glanz auf, die Schlagzähigkeit ist jedoch nicht ausreichend.

Aufgrund dieser Tatsache, d.h. der fehlenden Kombination aus hohem Glanz und hoher Schlagzähig – keit, ist ersichtlich, daß die Forderung nach hohem Glanz, hoher Schlagzähigkeit und guter Transluzenz, wie sie z.B. für zahlreiche Lebensmittelverpackungen gestellt wird, durch schlagfestes Polystyrol derzeit nicht erfüllt werden kann. Der Anwender, der hochglänzende und zugleich hochschlagfeste Fertigteile herstellen will, muß daher auf kostspieligere Werkstoffe, z.B. Styrol – Acrylnitril – Copolymerisate, die mit Polybutadie – nen schlagfest modifiziert sind (sog. ABS – Polymerisate) zurückgreifen.

Es bestand also die Aufgabe, mit Kautschuk schlagfest modifizierte, acrylnitrilfreie Styrolpolymerisate vorzuschlagen, die einen hohen Glanz, eine hohe Schlagzähigkeit und eine gute Transluzenz aufweisen.

Zwar ist in (4) und (5) ein Verfahren beschrieben, bei dem Styrol u.a. in Gegenwart eines linearen Styrol – Butadien – Blockcopolymerisats mit verschmiertem Übergang in einem isothermen Zweistufen – Prozeß polymerisiert und Formmassen z.B. mit guter Lochkerbschlagzähigkeit bzw. mit hoher Transluzenz erhalten werden. Wie sich beim Nacharbeiten und auch aus den der (4) beigefügten ELMI – Aufnahmen ergibt, weisen die nach (4) erhaltenen Formmassen eine KautschukTeilchen – Struktur und – Größenverteilung auf, mit der die vorstehend geschilderte, wünschenswerte Eigenschaftskombination nicht erzielt wird. Diese wird bei den erfindungsgemäßen Formmassen, wie die nachträgliche Untersuchung ergeben hat, durch eine spezielle Teilchengrößen – Verteilung erzielt.

Die erfindungsgemäßen Formmassen werden reproduzierbar nach einem eng umschriebenen Verfahren erhalten, dessen Übertragung in den technischen Betriebsbereich mit den fachüblichen Mitteln möglich ist.

Unmittelbarer Erfindungsgegenstand ist eine thermoplastische Formmasse, enthaltend – jeweils bezo – gen auf die Formmasse aus A + B –

A    80 bis 60 Gew.% einer Hartmatrix aus Polystyrol und
B    20 bis 40 Gew.% einer gleichmäßig darin verteilten Weichphase, deren mittlerer Teilchendurch – messer ($d_{50}$ – Wert; Volumenmittel) im Bereich von 0,25 bis 0,38 $\mu$m liegt, wobei die Teilchen – größenverteilungsbreite ($d_{95}$ – $d_5$ – Wert) 0,2 bis 0,6 $\mu$m beträgt, der $d_{60}$ – Wert im Bereich von 0,26 bis 0,40 $\mu$m liegt und der $d_{90}$ – Wert 0,40 bis 0,75 beträgt,

wie sie erhalten wird durch diskontinuierliche Polymerisation von Styrol in einer Zwei – Kessel – Kaskade in Gegenwart eines linearen Styrol – Butadien – Zweiblockcopolymerisates mit verschmiertem Übergang, das 35 bis 45 Gew.% Styrol und 65 bis 55 Gew.% Butadien bei einem Blockpolystyrolgehalt von 25 bis 35 Gew.% aufweist, wobei die Polymerisation im ersten Kessel, der ein Fassungsvermögen von etwa 20 1 aufweist, bei einem Füllgrad von etwa 66 % (bezogen auf 20˚C) thermisch unter Rühren mit einem Ankerrührer mit einer Drehzahl von 55 bis 65 min$^{-1}$ bei 123˚C isotherm in Masse bis zu einem Umsatz von 35 % betrieben und dann im zweiten Kessel, der ein Fassungsvermögen von 40 1 aufweist, in Gegenwart von Wasser, das auf 100˚C vorgeheizt worden ist, Schutzkolloiden und einem Peroxid – Initiator mit einer Halbwertszeit von 5 min bis 6 h, gemessen bei 100°C, in Suspension bis zu einem Umsatz von 99%, bezogen auf Styrol, polymerisiert.

Die erfindungsgemäße Formmasse ist somit vor allem dadurch gekennzeichnet, daß − wie gesagt − der mittlere Teilchendurchmesser ($d_{50}$; Volumenmittel) der Weichphase B im Bereich von 0,25 bis 0,38 $\mu$m liegt, die Teilchengrößenverteilungsbreite ($d_{95} - d_5$ − Wert) 0,2 bis 0,6 $\mu$m beträgt, der $d_{60}$ − Wert im Bereich von 0,26 bis 0,40 $\mu$m liegt und der $d_{90}$ − Wert 0,40 bis 0,75 beträgt.

Zu ihrer reproduzierbaren und sie somit beschreibenden Herstellung eignet sich das vorstehend im einzelnen angegebene Verfahren.

An sich ist bekannt, daß die physikalischen Eigenschaften schlagfester Polystyrole, d.h. Polystyrol mit einer darin dispergierten Weichphase, stark von der Größe der Weichphasenpartikel und deren Struktur abhängen.

Was die Größe der Teilchen angeht, so ist bekannt, daß Teilchen mit einem Durchmesser von mehr als 1 $\mu$m beträchtlich zur Schlagzähigkeit beitragen, jedoch den Glanz spritzgegossener Fertigteile erheblich verschlechtern.

Es ist auch bekannt, daß kleinere Teilchen zu einem hohen Glanz führen, daß aus derartigen Produkten spritzgegossene Formteile jedoch deutlich weniger schlagzäh sind als solche, die bei gleichem Kautschuk − gehalt größere Teilchen aufweisen.

Die Eigenschaften der erfindungsgemäßen Formmasse können wie folgt charakterisiert werden:

1. der Glanz daraus hergestellter spritzgegossener Fertigteile beträgt 78 bis 82 Skt,
2. die Transluzenz liegt im Bereich von 2 bis 4 und
3. die 50 %ige Schädigungsarbeit, an spritzgegossenen Fertigteilen beträgt mindestens 10 Nm.

Die Erfindung betrifft ferner ein Verfahren zur Herstellung von schlagfestem Polystyrol mit den vorstehend genannten Eigenschaften, durch diskontinuierliche Polymerisation einer Lösung eines Reak − tionsansatzes aus a) 82 bis 90 Gew.% Styrol und b) 10 bis 18 Gew.% eines linearen Styrol − Butadien − blockcopolymerisates mit verschmiertem Übergang, das 35 bis 45 Gew.% Styrol und 65 bis 55 Gew.% Butadien aufweist. Das Verfahren wird in Gegenwart von üblichen Mengen an Hilfsmitteln, gegebenenfalls in Anwesenheit eines Initiators, in einer Kaskade aus zwei Kesseln durchgeführt, wobei im 1. Kessel die Polymerisation in Masse bis mindestens zum Abschluß der Phaseninversion und höchstens bis zu Umsätzen. bezogen auf Styrol. von 40 Gew.% unter Rühren unter Ausbildung der späteren Weichphase, geführt wird und danach im 2. Kessel die Polymerisation in Suspension bis zum vollständigen Umsatz weitergeführt wird, woran sich eine übliche Aufarbeitung unter Gewinnung des Wertproduktes anschließt.

Nachstehend werden der Aufbau der erfindungsgemäßen Formmasse, sowie das Verfahren zu seiner Herstellung und die dafür erforderlichen Hilfsmittel beschrieben.

Die erfindungsgemäße Formmasse ist 2phasig aufgebaut und enthält 60 bis 80 Gew.%, vorzugsweise 65 bis 75 Gew.% der Komponente A (Hartmatrix) und 20 bis 40 Gew.%, vorzugsweise 35 bis 25 Gew.% der Komponente B (Weichphase).

Während oder nach der Herstellung der Formmasse, insbesondere für die Verarbeitung werden übliche Zusatzstoffe (Komponente C) zugesetzt.

Komponente A

Die Hartmatrix der erfindungsgemäßen Formmasse ist aus Polystyrol aufgebaut.

Die Viskositätszahl der Hartmatrix liegt im Bereich von 50 bis 100 ml/g (0,5 %ige Lösung in Toluol bei 23°C), insbesondere im Bereich von 60 bis 90 ml/g. Dies entspricht mittleren Molgewichten ($\overline{M}$w) von 126 000 bis 210 000. Die Herstellung derartiger Polystyrole und Copolymerisate (auch in Gegenwart von Kautschuk) ist dem Fachmann bekannt. Hinzuweisen ist darauf, daß − wie üblich − zu der Hartmatrix weder das in der Weichphase occludierte Polystyrol noch der gepfropfte Anteil des Polystyrols gerechnet wird.

Komponente B

Die erfindungsgemäße Formmasse weist als Komponente B eine Weichphase auf, die fein dispergiert in der Hartmatrix vorliegt. Diese Weichphase kann durch Elmiaufnahmen am Endprodukt, der Formmasse, nachgewiesen werden. Bei der Weichphase handelt es sich um ein Pfropfpolymerisat aus dem Monomeren der Hartmatrix, d.h. insbesondere von Styrol, das (die) auf ein lineares Styrol − Butadien − Zweiblockcopo − lymerisat gepfropft ist (sind).

Als lineare Styrol − Butadien − Zwei − Blockcopolymerisate im Sinne der vorliegenden Erfindung kommen die durch anionische Polymerisation mit Lithiuminitiatoren hergestellten, Blockcopolymerisate mit soge −

nanntem verschmierten Übergang in Frage, die durch Polymerisation einer Mischung der Monomeren Butadien und Styrol in Abwesenheit von Randomisern hergestellt werden. Die Verfahren zur Herstellung dieser linearen Zwei − Blockcopolymerisate sind bekannt. Der Polybintadienanteil dieser linearen Zwei − Blockpolymerisate liegt im Bereich von 55 bis 65 Gew.% und insbesondere 58 bis 62 Gew.%. Der Anteil an Styrol beträgt dementsprechend 45 bis 35 Gew.% und insbesondere 42 bis 38 Gew.%. Da ein bestimmter Anteil des Styrols entlang des Blockcopolymerisates verschmiert in dem Polybutadiensegment vorliegt. liegt der Anteil an Blockpolystyrol des Zweiblockcopolymerisates im Bereich von 25 bis 35 %, bevorzugt im Bereich von 30 bis 32 Gew.%.

Das Molekulargewicht des linearen Zweiblockcopolymerisats liegt im Bereich von 180.000 bis 250.000, dasjenige des Styrolblocks im Bereich von 50.000 bis 70.000 (jeweils GPC − Werte. d.h. also Gewichts − Mittelwerte).

Wesentlich für die Einstellung des Erfolgs ist zusätzlich zur Verwendung spezieller Blockcopolymeri − sate, daß die Weichphase einen speziellen Teilchenaufbau besitzt, nämlich überwiegend Kapselteilchen (vorzugsweise mehr als 90 % und insbesondere mehr als 97 % (Zahlenmittel)).

Die Teilchen der Weichphase weisen dabei einen Teilchendurchmesser von unterhalb 0,8 $\mu$m, auf, wobei der mittlere Teilchendurchmesser, $d_{50}$ (Volumenmittel) der Weichphase B im Bereich von 0.25 bis 0,38 $\mu$m liegt. Die Teilchengrößenverteilungsbreite $(d_{95} - d_5)$ − Wert beträgt 0,2 bis 0,6 $\mu$m, der $d_{60}$ − Wert liegt im Bereich von 0,26 bis 0,40 $\mu$m und der $d_{90}$ − Wert beträgt 0,40 bis 0,75.

Komponente C

Zusätzlich zu den Komponenten A und B kann die erfindungsgemäße Formmasse, jeweils bezogen auf 100 Gew. − Teile A und B. 1 bis 40 Gew. − Teile, vorzugsweise 1 bis 20 Gew. − Teile einer Komponente C enthalten. Diese Komponente C kann schon zur Herstellung der Formmasse dem Reaktionsansatz zugege − ben werden, oder aber für die Verarbeitung in die Formmasse eingemischt werden.

Unter der Komponente C sollen z.B. die für die Herstellung der Formmasse der vorliegenden Erfindung bekannten Hilfsmittel, wie Mineralöle, übliche Ester von aromatischen oder aliphatischen Carbonsäuren mit aliphatischen Alkoholen, Polvalkylenoxide auf Basis von Ethylenoxid und/oder Propylenoxid, Molekularge − wichtsregler. Schutzkolloide, und Antioxidantien verstanden werden. Als Hilfsmittel seien ferner genannt Gleitmittel, wie Zinkstearat und andere Stearate bzw. andere übliche Hilfsmittel. Für die Herstellung von Formteilen aus der Formmasse können noch zugesetzt werden Farbstoffe, Stabilisatoren, evtl. Flamm − schutzmittel in den dem Fachmann geläufigen Mengen.

Herstellung der erfindungsgemäßen Formmasse

Die Herstellung erfolgt durch diskontinuierliche Polymerisation des oder der die Hartmatrix aufbauenden Monomeren. d.h. insbesondere von Styrol, in Gegenwart des linearen Styrol − Butadien − Zwe − iBlockcopolymeren. Die Polymerisation kann dabei unter Verwendung von Reglern und den üblichen Initiatoren oder rein thermisch oder gemischt thermisch − radikalisch durchgeführt werden. Bei der diskon − tinuierlichen Verfahrensweise ist die Durchführung in einem Zweistufenverfahren bevorzugt, wobei die erste Verfahrensstufe in bekannter Weise in Masse, gegebenenfalls unter Verwendung eines Lösungsmittels, erfolgt und die zweite Stufe in Suspension durchgeführt wird. Verfahren zur diskontinuierlichen Durchfüh − rung des Verfahrens sind in der DE − AS 269 13 352 bzw. der US − PS 2 862 906 hinreichend beschrieben, so daß der Fachmann darauf zurückgreifen kann.

Beim bevorzugten diskontinuierlichen Verfahren, das in der ersten Stufe in Masse oder gegebenenfalls in Lösung durchgeführt wird, erfolgt mit Hilfe von Scherkräften (Rühren) die Einstellung der erforderlichen Morphologie und Verteilung der Weichphase (Kautschukmorphologie). Die Temperaturen in der ersten Verfahrensstufe liegen im Bereich von 50 ˚C bis 200⁰C. Es werden Umsätze bis 40 Gew.%, bezogen auf Styrol, angestrebt. In der nachfolgenden zweiten Verfahrensstufe, die in Suspension durchgeführt wird, werden dem Reaktionsansatz Wasser und die üblichen wasserlöslichen Suspensionsmittel sowie gegebe − nenfalls Initiatoren zugesetzt. Als Suspensionsmittel kommen insbesondere in Betracht: Methylcellulose, Oxypropylcellulose, Polyvinylalkohol und Polyvinylpyrrolidon.

Als Lösungsmittel, die gegebenenfalls angewendet werden, kommen in Betracht: Toluol, Xylol, Ethyl − benzol und Methylethylketon. Die genannten Lösungsmittel werden in Mengen von 2 bis 25 Gew.%, bezogen auf Styrol, angewendet. Bevorzugt wird, falls überhaupt ein Lösungsmittel angewendet wird, Ethylbenzol.

Als Kettenüberträger kommen die üblicherweise verwendeten Mercaptane mit 4 bis 18 C − Atomen in Betracht. Von den genannten Mercaptanen haben sich besonders das n − Butylmercaptan, das n − Octyl −

mercaptan sowie das n − oder t − Dodecylmercaptan bewährt. Dieser Mercaptane werden in Mengen von 0,01 bis 0,3 Gew.%, bezogen auf Styrol, vorzugsweise in der 1. Verfahrensstufe angewendet bzw. dem Reaktionsansatz schon zugegeben.

Als Initiatoren kommen insbesondere Peroxide mit Halbwertszeiten von 5 min bis 6 h bei 100°C in Frage. Als Beispiele seien genannt Dibenzoylperoxid, Dilauroylperoxide und 1, 1 − Ditertbutylperoxi − 3,3,5 − trimethylcyclohexan, die vorzugsweise in der 2. Verfahrensstufe zugesetzt werden.

Bei der Herstellung der erfindungsgemäßen Formmasse erfolgt sowohl die Einstellung als auch die beanspruchte Verteilung der Teilchen der mittleren Teilchengröße auf $d_{50}$ − Werte von 0,25 bis 0,38 $\mu$m durch Scherung nach der Phaseninversion. Diese Scherung, mit der die polymerisierende Lösung bzw. − nach der Phaseninversion − die Teilchendispersion ausgesetzt wird, ist in hohem Maße abhängig von der mechanischen Auslegung der Anlage, die zur Polymerisation verwendet wird.

Bei der Übertragung des Verfahrens von einer Anlage in eine andere, z.B. von einer kleineren in eine größere, sind daher stets einige orientierende Versuche notwendig, um die Scherbedingungen herauszu − finden, die zu überwiegend Kapselteilchen mit einem $d_{50}$ − Wert und einer Verteilung im beanspruchten Bereich führen. Bei einer solchen Übertragung muß insbesondere die Rührgeschwindigkeit, die Art des Rührwerkes, seine Geometrie, seine Eintauchtiefe in die polymerisierende Lösung, Einbauten in den gerührten Reaktoren, wie z.B. Strombrecher etc., berücksichtigt werden. Dasselbe gilt für die Übertragung auf ein kontinuierliches Verfahren, wie es z.B. in (2) beschrieben ist.

Die in den Beispielen und Vergleichsversuchen beschriebenen Parameter wurden wie folgt bestimmt:

1. Die Viskositätszahl, VZ, der Hartmatrix in ml/g wird analog DIN 53 724 bestimmt.

2. Zur Bewertung der Transluzenz, TL, der beim erfindungsgemäßen Verfahren erhaltenen Produkte wird zunächst eine Skala erstellt. Diese Skala umfaßt die Werte 1 bis 9 in der folgenden Tabelle 1 , wobei die niedrigeren Werte eine gute Transluzenz repräsentieren. Um die in der Tabelle 1 angeführten Werte zu erzielen, wurde ein handelsübliches schlagfestes Polystyrol (Produkt A), das 15 Gew.% eines Styrol − Butadien − Blockkautschuks mit Kapselteilchenmorphologie (Typ Buna BL 6533) mit 60 Gew.% Butadien enthielt, zugrundegelegt (Benotung 4). Abmischungen dieses Produktes A in den in der Tabelle 1 genannten Gewichtsverhältnissen mit Standardpolystyrol der VZ 96 [ml/g] ergaben die Werte von 3 bis 1 für die Transluzenz. Durch Abmischung des genannten Standardpolystyrols mit einem schlagfesten Polystyrol mit Zellenteilchenmorphologie (Produkt B) (Handelsprodukt (thermisch hergestellt)), das 8 Gew.% Polybutadien enthält, wurden höhere Werte der Transluzenz erzielt; vgl. die Werte 5 bis 9 in der Tabelle.

Von Proben der erfindungsgemäßen Produkte der Beispiele und der Vergleichsversuche wurden Preßplättchen hergestellt und visuell mit den entsprechenden Preßblättchen der Standards der Skala verglichen.

Tabelle 1

| Note für die Transluzenz | Produkt A | Abmischung in Gew. − Teilchen Standardpolystyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

3. Der Glanz wurde an spritzgegossenen Testkästchen in der Form eines Pyramidenstumpfes mit rechteckiger Grundfläche mittels eines Labor − Reflektometers der Fa. Lange bei einem Einfallswinkel von 45° gemessen. Diese Art der Glanzmessung ist eine Relativmessung. Seine Einheit wird in Skalenteilen (SKT) bezogen auf einen von der Fa. Lange mitgelieferten Standard angegeben. Als Bedingungen für den Spritzguß wurden eine Masse − (Kunststoff) − Temperatur von 280°, eine Form − temperatur von 40°C und eine Einspritzzeit von 0,6 s gewählt. Zur Verdeutlichung sind in den Ver − gleichsbeispielen Glanzwerte von Polystyrolsortimentsprodukten der BASF angegeben, wobei die Test − kästchen unter identischen Spritzgußbedingungen erhalten wurden.

4. Als Maß für die Schlagzähigkeit wird die 50 %ige Schädigungsarbeit, $W_{50}$, [Nm] aus einem Fallbolzenversuch gemäß DIN 53 443 bei T = 23°C an den unter 3. beschriebenen Testkästchen angegeben.

5. Von den Produkten der Beispiele und von Vergleichsproben wurden in bekannter Weise elektronenmikroskopische Dünnschichtaufnahmen angefertigt, die zur Bestimmung der Teilchengröße und Verteilung der Weichphase dienten.

Die Bestimmung geschah mit Hilfe der Bildanalyse nach dem Verfahren wie es von W. Alex in Zeitschrift für Aufbereitung und Verfahrenstechnik 13, (1972) im Kap. 3.11 beschrieben ist. Die Zahl der ausgewerteten Teilchen lag zwischen 4000 und 9500.

Bei der Angabe der mittleren Teilchengröße handelt es sich in allen Fällen um das Volumenmittel der Teilchengröße. Die Bildanalyse liefert die integrale Volumenverteilung des Teilchendurchmessers einer Probe. Hieraus läßt sich entnehmen, wieviel Volumenprozent der Teilchen einen Durchmesser gleich oder kleiner einer bestimmten Größe haben. Der mittlere Teilchendurchmesser, der auch als $d_{50}$−Wert der integralen Volumenverteilung bezeichnet wird, ist dabei als der Teilchendurchmesser definiert, bei dem 50 Vol.% der Teilchen einen kleineren Durchmesser haben als der Durchmesser, der dem $d_{50}$−Wert entspricht. Ebenso haben dann 50 Vol.% der Teilchen einen größeren Durchmesser als dem $d_{50}$−Wert entspricht. Zur Charakterisierung der Teilchengrößenverteilung der Kautschukteilchen werden neben dem $d_{50}$−Wert (mittlerer Teilchendurchmesser) die sich ebenfalls aus der integralen Volumenverteilung ergebenden $d_5$− und $d_{95}$−Werte herangezogen. Der $d_5$− bzw. $d_{60}$, $d_{90}$− und der $d_{95}$−Wert der integralen Volumenverteilung ist dabei entsprechend dem $d_{50}$−Wert definiert mit dem Unterschied, daß sie auf 5, 60, 90 bzw. 95 Vol.% der Teilchen bezogen sind.

Zur Durchführung der Beispiele und für Vergleichszwecke wurden die folgenden Produkte verwendet:

K: Als Kautschuk (elastomere Pfropfgrundlage) wurde ein Handelsprodukt, Buna BL 6533 verwendet. Es handelt sich um ein lineares Styrol−Butadien−Zwei−Blockcopolymerisat mit verschmiertem Übergang, das ca. 42 Gew`% Styrol, 58 Gew.% Butadien bei ca. 31 Gew.% Blockpolystyrol aufwies. Das Gesamtmolgewicht (GPC) betrug 205 000, das des Styrolblocks 60 000.

Für Vergleichszwecke wurden die Produkte A, B und C verwendet. Es handelt sich dabei um Handelsprodukte der BASF AG mit unterschiedlicher Morphologie, die jeweils ca. 8,1 Gew.% Kautschuk, berechnet als Pbu, aufweisen.

A. Schlagfestes Polystyrol 525 K mit Kapselteilchenmorphologie bei einem $d_{50}$−Wert von 0,29 $\mu$m, kontinuierlich hergestellt in Anlehnung an Beispiel 3 der Druckschrift (3). VZ = 78 ml/g.

B: Schlagfestes Polystyrol 576 H mit Zellenteilchenmorphologie bei einem $d_{50}$−Wert von 0,71 $\mu$m. VZ = 70 ml/g.

C: Schlagfestes Polystyrol 586 G, VZ = 70 ml/g, mit Zellenteilchenmorphologie bei einem $d_{50}$−Wert von 1,1 $\mu$m.

Die nachfolgenden Beispiele und Vergleichsversuche sollen die Erfindung näher erläutern. Die angegebenen Teile und Prozente beziehen sich dabei, sofern nicht anders erwähnt auf das Gewicht.

Beispiele 1 und 2

Die Polymerisation erfolgte diskontinuierlich im 10 kg−Maßstab nach einem Masse−Suspensions−Prozeß in einer Zwei−Kessel−Kaskade, bestehend aus den Kesseln A und B. Im Kessel A (~20 1 Fassungsvermögen, 304 mm Durchmesser, 300 mm Höhe) wird die Vorpolymerisation der styrolischen Kautschuklösung isotherm unter Rühren durchgeführt. Jedem der beiden Polymerisationsansätze wurden, bezogen auf 100 Teile Styrol und Kautschuk, 0,1 Teile t−Dodecylmercaptan als Molekulargewichtsregler, 2,3 Teile ®Minog 70 als Mineralöl und 0,12 Teile ®Irganox 1076 (eines sterisch gehinderten Phenols) als Antioxydans zugesetzt. Es wurden jeweils 85 Gew.% Styrol und 15 Gew.% Kautschuk als Reaktionsansatz verwendet. Der genannte Ansatz aus Styrol, elastomerer Pfropfgrundlage` sowie zusätzlich Mineralöl, Antioxydans und Regler wurde in einer Menge von 12.000 g in den Kessel gegeben. Daraus ergibt sich ein Füllgrad des Kessels von ca. 66 Vol.% bei T = 20°C, wenn man die Dichte des Styrol von 0,906 g/cm$^3$ bei T = 20°C zugrundelegt. Als Rührer wurde ein Ankerrührer (Wellendurchmesser: 28 mm, Blattlänge 210 mm) mit einem Durchmesser von 285 mm verwendet, dessen Abstand vom Boden des Kessels 20 mm betrug. Daraus folgt bei einer Füllhöhe von 215 mm bei Raumtemperatur eine Eintauchtiefe des Rührers von 195 mm.

Die Lösung wurde bei T = 123°C bis zu Umsätzen von 35±1 % gerührt und zwar bei Rührerdrehzahlen von 55 (Beispiel 1) bzw. 65 min$^{-1}$ (Beispiel 2).

Im Kessel B, einem ebenfalls mit einem Ankerrührer ausgestatteten Kessel mit einem Fassungsvermö−gen von 40 1, werden 18.000 g Wasser, 180 g ®Luviskol K 90, einem Schutzkolloid auf Basis von Ethylenoxid, und 18 g Natriumpyrophosphat gegeben und auf ca. 100˚C gebracht. Ist in Kessel A der Umsatz auf den Wert von 35±1 %, bezogen auf das Styrol, gestiegen, werden 0,1 Teile Dicumylperoxid, bezogen auf den Gesamtansatz, zugesetzt. Die Rührerdrehzahl in Kessel B wird dann auf 300 $\min^{-1}$ eingestellt und der Inhalt von Kessel A mittels Stickstoff über ein Verbindungsrohr innerhalb von maximal 15 min in den Kessel B gedrückt. In der derart hergestellten wäßrigen Suspension wird anschließend jeweils isotherm 6 h bei T = 130˚C und 6 h bei T = 140˚C bis zu einem Umsatz von mehr als 99 %, bezogen auf Styrol, polymerisiert. Nach dieser Zeit wird der Kesselinhalt auf 30˚C abgekühlt, abgelassen und gründlich mit Wasser gewaschen und anschließend 24 h im Vakuumtrockenschrank bei T = 60˚C und p = 20 Torr getrocknet. Danach erfolgt eine Konfektionierung über einen Extruder (ZSK 30, Werner + Pfleiderer), um das Produkt in eine Granulatform zu bringen.

Viskositätszahlen der Hartmatrix, Glanz, Transluzenz und Schlagzähigkeit sind in Tabelle 2 angegeben. Zusätzlich sind die Eigenschaften der Produkte A, B und C mit aufgenommen worden und, sofern dies erforderlich war (Produkt A), durch die Teilchendurchmesser, erhalten durch Bildanalyse, ergänzt worden.

Beim Vergleich von Glanz, Transluzenz und Schlagzähigkeit der erfindungsgemäßen Formmassen mit den Werten der Handelsprodukte A, B und C erkennt man eine deutlich zunehmende Schlagzähigkeit, die durch ein starkes Abfallen in Glanz und Transluzenz begleitet wird.

Tabelle 2: Durchmesser der Weichphase gemäß Bildanalyse in [$\mu$m]

| Beispiel | VZ | Glanz SKT | TL SKT | W50 Nm | d50 | d95 | d5 | (d95-d5) | d60 | d90 |
|---|---|---|---|---|---|---|---|---|---|---|
| 1 | 69,8 | 79,5 | 2,5 | 31,2 | 0,32 | 0,64 | 0,21 | 0,43 | 0,34 | 0,50 |
| 2 | 68,4 | 79,1 | 3 | 26,5 | 0,28 | 0,52 | 0,19 | 0,33 | 0,31 | 0,48 |
| Vergleichs-probe | | | | | | | | | | |
| A | 78 | 80,3 | 4 | 0,2 | 0,29 | 0,38 | 0,21 | 0,17 | 0,30 | 0,35 |
| B | 70 | 70,0 | >9 | 9,6 | 0,71 | - | - | - | - | - |
| C | 70 | 61,1 | >9 | 36,5 | 1,1 | - | - | - | - | - |

**Patentansprüche**

1. Thermoplastische Formmasse, enthaltend − jeweils bezogen auf die Formmasse aus A + B −
    A    80 bis 60 Gew.% einer Hartmatrix aus Polystyrol und

8

B   20 bis 40 Gew.% einer gleichmäßig darin verteilten Weichphase, deren mittlerer Teilchen–durchmesser ($d_{50}$; Volumenmittel) im Bereich von 0,25 bis 0,38 $\mu$m liegt, wobei die Teilchen–größenverteilungsbreite ($d_{95} - d_5$ – Wert) 0,2 bis 0,6 $\mu$m beträgt, der $d_{60}$ – Wert im Bereich von 0,26 bis 0,40 $\mu$m liegt und der $d_{90}$ – Wert 0,40 bis 0,75 beträgt,

wie sie erhalten wird durch diskontinuierliche Polymerisation von Styrol in einer Zwei–Kessel–Kaskade in Gegenwart eines linearen Styrol–Butadien–Zweiblockcopolymerisates mit verschmiertem Übergang, das 35 bis 45 Gew.% Styrol und 65 bis 55 Gew.% Butadien bei einem Blockpolystyrolgehalt von 25 bis 35 Gew.% aufweist, wobei die Polymerisation im ersten Kessel, der ein Fassungsvermögen von etwa 20 l aufweist, bei einem Füllgrad von etwa 66 % (bezogen auf 20˚C) thermisch unter Rühren mit einem Ankerrührer mit einer Drehzahl von 55 bis 65 min$^{-1}$ bei 123˚C isotherm in Masse bis zu einem Umsatz von 35 % betrieben und dann im zweiten Kessel, der ein Fassungsvermögen von 40 l aufweist, in Gegenwart von Wasser, das auf 100˚C vorgeheizt worden ist, Schutzkolloiden und einem Peroxid–Initiator mit einer Halbwertszeit von 5 min bis 6 h, gemessen bei 100˚C, in Suspension bis zu einem Umsatz von mehr als 99%, bezogen auf Styrol, polymerisiert.

2.   Formmasse nach Anspruch 1, einpolymerisiert enthaltend als lineares Styrol–Butadien–Zweiblockcopolymerisat ein Blockcopolymerisat, das 38 bis 42 Gew.% Styrol und 62 bis 58 Gew.% Butadien bei einem Blockpolystyrolgehalt von 25 bis 35 Gew.% aufweist.

3.   Formmasse nach Anspruch 1, einpolymerisiert enthaltend ein lineares StyrolButadien–Zweiblockcopolymerisat, dessen mittleres Molekulargewicht im Bereich von 180.000 bis 250.000 liegt, wobei das Molekulargewicht des Styrolblocks 50.000 bis 70.000 beträgt.

**Claims**

1.   A thermoplastic molding material containing, in each case based on the molding material comprising A + B,
A   from 80 to 60% by weight of a hard matrix composed of polystyrene and
B   from 20 to 40% by weight of a soft phase which is uniformly distributed therein and whose median particle diameter ($d_{50}$; volume average) is from 0.25 to 0.38 $\mu$m, the particle size distribution width ($d_{95} - d_5$ value) being from 0.2 to 0.6 $\mu$m, the $d_{60}$ value being from 0.26 to 0.40 $\mu$m and the $d_{90}$ value being from 0.40 to 0.75,
as obtained by batchwise polymerization of styrene in a two–kettle cascade in the presence of a linear styrene/butadiene two–block copolymer which has a tapered transition and contains from 35 to 45% by weight of styrene and 65 to 55% by weight of butadiene with a block polystyrene content of from 25 to 35% by weight, the polymerization in the first kettle, which has a capacity of about 20 l, being operated as an isothermal mass polymerization at 123˚C at a degree of filling of about 66% (based on 20˚C) while stirring with an anchor stirrer at a speed of from 55 to 65 min$^{-1}$ to a conversion of 35%, and polymerization in the second kettle, which has a capacity of 40 l, then being effected in the presence of water which has been preheated to 100˚C, protective colloids and a peroxide initiator having a half–life of from 5 minutes to 6 hours, measured at 100˚C, in suspension to a conversion of more than 99%, based on styrene.

2.   A molding material as claimed in claim 1, containing, as a polymerized linear styrene/butadiene two–block copolymer, a block copolymer which has from 38 to 42% by weight of styrene and 62 to 58% by weight of butadiene with a block polystyrene content of from 25 to 35% by weight.

3.   A molding material as claimed in claim 1, containing a polymerized styrene/butadiene two–block copolymer whose average molecular weight is from 180,000 to 250,000, the molecular weight of the styrene block being from 50,000 to 70,000.

**Revendications**

1.   Masse à mouler thermoplastique, contenant – chaque fois par rapport à la masse à mouler de A + B –
A   de 80 à 60% en poids d'une matrice dure en polystyrène et
B   de 20 à 40% en poids d'une phase molle qui y est répartie uniformément et dont le diamètre moyen de particules ($d_{50}$; moyenne en volume) se situe dans la gamme de 0,25 à 0,38 $\mu$m, la

largeur de répartition granulométrique (valeur $d_{95} - d_5$) étant de 0,2 à 0,6 $\mu$m, la valeur $d_{60}$ se situant dans la gamme de 0,26 à 0,40 $\mu$m et la valeur $d_{90}$ étant de 0,40 à 0,75, telle qu'elle est obtenue par polymérisation discontinue de styrène dans une cascade de deux cuves, en présence d'un copolymère séquencé binaire styrène/butadiène linéaire à transitions non franches qui comporte 35 à 45% en poids de styrène et 65 à 55% en poids de butadiène pour une teneur en polystyrène séquencé de 25 à 35% en poids, la polymérisation dans la première cuve, qui présente une capacité d'environ 20 1, étant effectuée thermiquement à un degré de remplissage d'environ 66% (sur la base de 20°C), sous agitation avec un agitateur à palette en U à une vitesse de rotation de 55 à 65 mn$^{-1}$, isothermiquement à 123°C, en masse jusqu'à un degré de transformation de 35%, puis la polymérisation dans la seconde cuve, qui présente une capacité de 40 1, étant effectuée en présence d'eau qui a été pré-chauffée à 100°C, de colloïdes de protection et d'un initiateur du type peroxyde ayant un temps de demi-réaction de 5 mn à 6 h mesuré à 100°C, en suspension jusqu'à un degré de transformation de plus de 99% sur la base du styrène.

2. Masse à mouler selon la reendication 1, contenant en liaison polymère, en tant que copolymère séquencé binaire styrène/butadiène linéaire, un copolymère séquencé qui comporte de 38 à 42% en poids de styrène et de 62 à 58% en poids de butadiène, pour une teneur en polystyrène séquencé de 25 à 35% en poids.

3. Masse à mouler selon la revendication 1, contenant en liaison polymère un copolymère séquencé binaire styrène/butadiène linéaire dont le poids moléculaire moyen se situe dans la gamme de 180 000 à 250 000, le poids moléculaire du bloc de styrène étant compris entre 50 000 et 70 000.